(19) Europäisches Patentamt / European Patent Office / Office européen des brevets

(11) **EP 3 208 669 A1**

(12) **EUROPÄISCHE PATENTANMELDUNG**

(43) Veröffentlichungstag:
**23.08.2017   Patentblatt 2017/34**

(51) Int Cl.:
*G05B 13/02* (2006.01)          *G05B 19/19* (2006.01)
*G05B 19/404* (2006.01)      *H02P 23/04* (2006.01)
*H02P 6/10* (2006.01)

(21) Anmeldenummer: **16156494.3**

(22) Anmeldetag: **19.02.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Bönke, Daniel**
  **48619 Heek (DE)**
• **Hamm, Carsten**
  **91330 Eggolsheim (DE)**
• **Haschka, Markus Stephan**
  **90419 Nürnberg (DE)**

(54) **DREHZAHLABHÄNGIGE KOMPENSATION VON LAGEFEHLERN**

(57)     Eine Steuereinrichtung (2) ermittelt in einem Normalbetrieb anhand einer Sollgröße (x*) und einer Istgröße (x) eines Antriebs (1) eine Stellgröße (S) für den Antrieb (1) und beaufschlagt den Antrieb (1) mit der Stellgröße (S). Die Steuereinrichtung (2) korrigiert vor dem Ermitteln der Stellgröße (S) die Sollgröße (x*), die Istgröße (x) oder die Differenz von Sollgröße (x*) und Istgröße (x) um einen Korrekturwert (K) oder vor dem Beaufschlagen des Antriebs (1) mit der Stellgröße (S) die Stellgröße (S) um den Korrekturwert (K). Der Korrekturwert (K) ist sowohl von der Drehstellung (φ) des Antriebs (1) als auch von der Drehzahl (ω) des Antriebs (1) abhängig.

FIG 2

EP 3 208 669 A1

**Beschreibung**

Die vorliegende Erfindung geht aus von einem Betriebsverfahren für eine Steuereinrichtung,

- wobei die Steuereinrichtung in einem Normalbetrieb der Steuereinrichtung anhand einer Sollgröße und einer Istgröße eines Antriebs eine Stellgröße für den Antrieb ermittelt und den Antrieb mit der Stellgröße beaufschlagt,
- wobei die Steuereinrichtung im Normalbetrieb vor dem Ermitteln der Stellgröße die Sollgröße, die Istgröße oder die Differenz von Sollgröße und Istgröße um einen Korrekturwert korrigiert oder vor dem Beaufschlagen des Antriebs mit der Stellgröße die Stellgröße um den Korrekturwert korrigiert,
- wobei der Korrekturwert von der Drehstellung des Antriebs abhängig ist.

Die vorliegende Erfindung geht weiterhin aus von einem Steuerprogramm für eine Steuereinrichtung eines Antriebs, wobei das Steuerprogramm Maschinencode umfasst, der von der Steuereinrichtung unmittelbar abarbeitbar ist, wobei die Abarbeitung des Maschinencodes durch die Steuereinrichtung bewirkt, dass die Steuereinrichtung ein derartiges Betriebsverfahren ausführt.

Die vorliegende Erfindung geht weiterhin aus von einer Steuereinrichtung für einen Antrieb, wobei die Steuereinrichtung mit einem derartigen Computerprogramm programmiert ist.

Die vorliegende Erfindung geht weiterhin aus von einem Antrieb, wobei der Antrieb von einer derartigen Steuereinrichtung gesteuert wird.

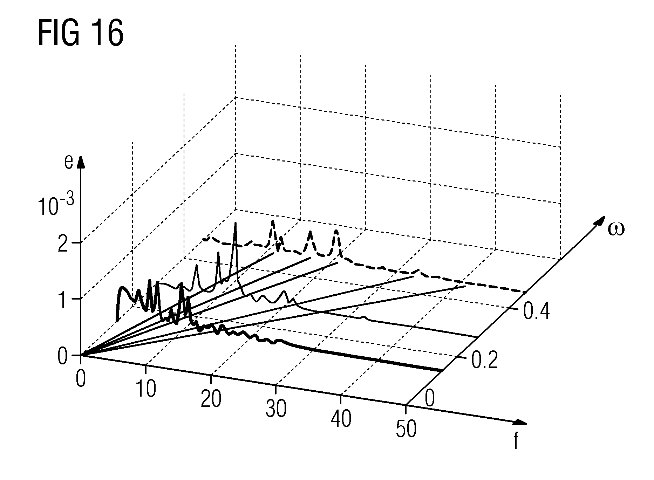

Bei vielen Maschinen - beispielsweise Werkzeugmaschinen und anderen Produktionsmaschinen - wirken die Antriebe über mechanische Systemkomponenten wie beispielsweise Getriebe, Zahnriemen, einen Kugel-Gewindetrieb und andere auf die eigentlich zu verstellende Komponente. Unvermeidbare Fertigungstoleranzen bringen dadurch Lage- und Geschwindigkeitsfehler in das Gesamtsystem ein. Viele dieser Fehler sind ortsperiodisch. Bei konstanter Drehzahl sind diese auch zeitlich periodisch. Wird beispielsweise ein Zahnriemengetriebe mit 45 Zähnen auf der Antriebsseite und 15 Zähnen auf der Abtriebsseite verwendet, so entstehen durch Fehler der Getriebezähne bei einer konstanten Drehzahl von 60 Umdrehungen/min auf dem Zahnrad mit 45 Zähnen Störungen der Frequenz 45 Hz. Das andere Zahnrad dreht aufgrund der geringeren Anzahl von Zähnen entsprechend schneller. Störungen treten daher ebenfalls mit 45 Hz auf. Eine weitere mögliche Quelle periodischer Störungen in Antrieben sind Nutrastmomente. Diese treten ebenfalls ortsperiodisch mit der Drehstellung des Antriebs auf. FIG 16 zeigt rein beispielhaft einen Regelfehler e. $\omega$ bezeichnet die Drehzahl des Antriebs. Die mit f bezeichnete Richtung bezeichnet die Frequenz. Nach oben ist in FIG 16 aufgetragen, in welchem Ausmaß der Regelfehler e bei welcher Frequenz auftritt. Die auftretenden Regelfehler e können bestimmten Ursachen wie beispielsweise Fertigungstoleranzen des Zahnriemens oder Nutrastmomenten zugeordnet werden. Es treten sowohl die Grundfrequenz als auch deren Harmonische auf.

Zur Verringerung von Störeffekten wird üblicherweise eine Regelung eingesetzt, deren Verstärkungsfaktor hoch ist. Dadurch kann in einem breiten Frequenzspektrum eine gute Positioniergenauigkeit erreicht werden.

Es ist weiterhin bekannt, in Abhängigkeit von der Drehstellung des Antriebs einen Korrekturwert zu ermitteln und den Korrekturwert zur Korrektur von Sollgröße, Istgröße oder Stellgröße zu verwenden. Durch diese Vorgehensweise lassen sich insbesondere Nutrastmomente gut kompensieren. Der Korrekturwert ist jedoch ausschließlich von der Drehstellung des Antriebs abhängig. Weitere Abhängigkeiten bestehen nicht.

Für viele Anwendungsfälle ist bereits die Verwendung einer Regelung mit einem hohen Verstärkungsfaktor vollauf ausreichend. Für viele weitere Anwendungsfälle ist die Korrektur in Abhängigkeit von der Drehstellung des Antriebs ausreichend. Beide Vorgehensweisen sind jedoch noch verbesserungsfähig.

Die Aufgabe der vorliegenden Erfindung besteht darin, Möglichkeiten zu schaffen, mittels derer die Positioniergenauigkeit bzw. allgemein ausgedrückt die Regelgenauigkeit eines Antriebs noch weiter verbessert werden kann. Weiterhin sollen nicht nur Nutrastmomente, sondern allgemein jegliche periodische Regelfehler mit hoher Genauigkeit korrigierbar sein.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 9.

Erfindungsgemäß wird ein Betriebsverfahren der eingangs genannten Art dadurch ausgestaltet, dass der Korrekturwert zusätzlich von der Drehstellung des Antriebs auch von der Drehzahl des Antriebs abhängig ist.

Durch diese Ausgestaltung können insbesondere Drehzahlabhängigkeiten berücksichtigt werden. Dies ist vor allem bei höheren Drehzahlen ein entscheidender Faktor.

Die Istgröße kann nach Bedarf bestimmt sein. Insbesondere kann die Istgröße die Drehstellung oder die Drehzahl des Antriebs oder ein von dem Antrieb ausgeübtes Moment oder ein hieraus abgeleiteter Wert sein. Unter dem Begriff "abgeleiteter Wert" ist im Rahmen der vorliegenden Erfindung ein Wert zu verstehen, der aufgrund der geometrisch-konstruktiven Gegebenheiten des Antriebs oder einer vom Antrieb angetriebenen Einrichtung direkt und unmittelbar in die jeweilige Istgröße umgerechnet werden kann. Wenn die Istgröße die Drehstellung ist, handelt es sich bei dem abgeleiteten Wert ebenfalls um eine Drehstellung oder um eine Lage. Wenn die Istgröße die Drehzahl ist, handelt es sich bei dem abgeleiteten Wert ebenfalls um eine Drehzahl oder um eine Geschwindigkeit. Wenn die Größe des Antriebs ein Moment ist, handelt es sich bei dem abgeleiteten Wert ebenfalls um ein Moment oder um eine Kraft.

Vorzugsweise ist das Betriebsverfahren derart ausgestaltet, dass die Steuereinrichtung im Normalbetrieb

- anhand der Drehzahl des Antriebs ermittelt, welche von in einem Kennlinienfeld gespeicherten Basiswerten sie aus dem Kennlinienfeld ausliest,
- anhand der aus dem Kennlinienfeld ausgelesenen Basiswerte Parameter ermittelt,
- eine von der Drehstellung des Antriebs abhängige Funktion mit den ermittelten Parametern parametriert und
- den Korrekturwert durch Einsetzen der Drehstellung des Antriebs in die parametrierte Funktion ermittelt.

Es ist möglich, dass die (momentane) Drehzahl des Antriebs exakt oder nahezu exakt mit einer Basisdrehzahl korrespondiert, für welche die Basiswerte ermittelt wurden. In diesem Fall können aus dem Kennlinienfeld schlichtweg die entsprechenden Basiswerte ausgelesen und als Parameter verwendet werden. Alternativ ist es jedoch ebenso möglich, dass die (momentane) Drehzahl des Antriebs deutlich von allen Basisdrehzahlen abweicht. In diesem Fall kann die Verwendung derjenigen Basiswerte erfolgen, deren zugehörige Basisdrehzahl der momentanen Drehzahl des Antriebs am nächsten kommt. Alternativ kann eine Interpolation erfolgen, insbesondere eine lineare Interpolation der Basiswerte für die nächstniedrigere und die nächsthöhere Basisdrehzahl.

Die im Kennlinienfeld gespeicherten Basiswerte können insbesondere Wichtungsfaktoren sein, welche festlegen, zu welchem Ausmaß und mit welcher Phasenlage ganzzahlige Vielfache der Drehstellung in die Ermittlung des Korrekturwerts eingehen.

Die parametrierbare Funktion und deren Parametrierung ist als solche analog zur Kompensation eines Nutrastmoments. Im Unterschied zur Vorgehensweise des Standes der Technik sind die Wichtungsfaktoren jedoch nicht konstant, sondern von der Drehzahl des Antriebs abhängig. Weiterhin wird mittels der parametrierbaren Funktion vorzugsweise nur ein variabler Anteil des Regelfehlers korrigiert. Ein konstanter Anteil kann ohne weiteres durch die normale Regelung (d.h. die Ermittlung der Stellgröße anhand von Sollgröße und Istgröße) oder durch eine Vorsteuerung kompensiert werden.

Die Basiswerte des Kennlinienfelds können auf prinzipiell beliebige Weise im Kennlinienfeld hinterlegt werden. Von besonderem Vorteil ist es jedoch, wenn die Steuereinrichtung in einem Lernbetrieb für eine Mehrzahl von Basisdrehzahlen des Antriebs jeweils die Basiswerte ermittelt und in dem Kennlinienfeld abspeichert.

Zum Ermitteln der Basiswerte ist vorzugsweise vorgesehen, dass die Steuereinrichtung im Lernbetrieb die Basiswerte durch eine wiederholte Ausführung eines Lernzyklus ermittelt und dass die Steuereinrichtung in den Lernzyklen

- anhand der im vorherigen Lernzyklus gültigen Basiswerte in Verbindung mit einem Regelfehler des vorherigen Lernzyklus die für den jeweiligen Lernzyklus gültigen Basiswerte ermittelt,
- eine mit der jeweiligen Basisdrehzahl variierende Lern-Sollgröße ermittelt,
- anhand der Lern-Sollgröße und der Istgröße des Antriebs eine Lern-Stellgröße für den Antrieb ermittelt und den Antrieb mit der Lern-Stellgröße beaufschlagt,
- die von der Drehstellung des Antriebs abhängige Funktion mit für die jeweilige Basisdrehzahl im jeweiligen Lernzyklus gültigen Basiswerten parametriert und durch Einsetzen der Drehstellung des Antriebs in die parametrierte Funktion einen jeweiligen Korrekturwert ermittelt,
- vor dem Ermitteln der Lern-Stellgröße die Lern-Sollgröße, die Istgröße oder die Differenz von Lern-Sollgröße und Istgröße um den jeweiligen Korrekturwert korrigiert oder vor dem Beaufschlagen des Antriebs mit der Lern-Stellgröße die Lern-Stellgröße um den jeweiligen Korrekturwert korrigiert und
- durch Bilden der Differenz von Lern-Sollgröße und Istgröße den Regelfehler für den jeweiligen Lernzyklus ermittelt.

Durch diese Vorgehensweise können die Basiswerte besonders exakt ermittelt werden.

Vorzugsweise ist vorgesehen, dass die Steuereinrichtung im Rahmen der Ermittlung der für den jeweiligen Lernzyklus gültigen Basiswerte den Regelfehler des vorherigen Lernzyklus mit einer Lernrate wichtet und dass die Steuereinrichtung die Lernrate von Lernzyklus zu Lernzyklus jeweils neu bestimmt. Dadurch ist eine sehr schnelle Ermittlung der Basiswerte in wenigen Lernzyklen möglich.

In einer bevorzugten Ausgestaltung ist vorgesehen, dass die Steuereinrichtung nach dem Ermitteln des Regelfehlers für den jeweiligen Lernzyklus

- prüft, ob sich gegenüber dem vorherigen Lernzyklus eine Verringerung des Regelfehlers ergibt,
- im Falle einer Verringerung des Regelfehlers die im jeweiligen Lernzyklus gültigen Basiswerte beibehält und
- anderenfalls die im vorherigen Lernzyklus gültigen Basiswerte als Basiswerte für den jeweiligen Lernzyklus bestimmt.

Dadurch wird erreicht, dass der Korrekturwert stets den Regelfehler (also die Differenz zwischen Sollgröße und Istgröße) reduziert bzw. zumindest nicht vergrößert.

In einer möglichen Ausgestaltung des Betriebsverfahrens ist vorgesehen, dass die Steuereinrichtung im Lernbetrieb für die Basisdrehzahlen jeweils eine Vielzahl von Basiswerten ermittelt und eigenständig entscheidet, welche der im Lernbetrieb für die jeweilige Basisdrehzahl ermittelten Basiswerte sie in dem Kennlinienfeld speichert. Durch diese Vorgehensweise kann eine eigenständige, optimale Korrektur erfolgen. In dem Fall, dass die im Kennlinienfeld gespeicherten Basiswerte Wichtungsfaktoren sind, welche festlegen, zu welchem Ausmaß ganzzahlige Vielfache der Drehstellung in die Ermittlung des Korrekturwerts eingehen, kann die Steuereinrichtung beispielsweise für eine Vielzahl von ganzzahligen Vielfachen der Drehstellung (nachfolgend kurz: Grundschwingung und Oberschwingungen) den jeweiligen Anteil am Regelfehler ermitteln und sodann - selektiv für die jeweilige Basisdrehzahl - die Wichtungsfaktoren derjenigen Grundschwingung bzw. Oberschwingungen im Kennlinienfeld speichern, die am meisten zum Regelfehler beitragen. Die Grenze, bis zu der die Wichtungsfaktoren im Kennlinienfeld gespeichert werden, kann beispielsweise durch die Gesamtzahl an gespeicherten Wichtungsfaktoren oder durch einen Grenzwert für die Wichtungsfaktoren einer bestimmten Schwingung gegeben sein.

Die Aufgabe wird weiterhin durch ein Computerprogramm mit den Merkmalen des Anspruchs 10 gelöst. Erfindungsgemäß bewirkt die Abarbeitung des Maschinencodes durch die Steuereinrichtung, dass die Steuereinrichtung ein erfindungsgemäßes Betriebsverfahren ausführt.

Die Aufgabe wird weiterhin durch eine Steuereinrichtung mit den Merkmalen des Anspruchs 11 gelöst. Erfindungsgemäß ist die Steuereinrichtung mit einem erfindungsgemäßen Steuerprogramm programmiert.

Die Aufgabe wird weiterhin durch einen Antrieb mit den Merkmalen des Anspruchs 12 gelöst. Erfindungsgemäß wird der Antrieb von einer erfindungsgemäßen Steuereinrichtung gesteuert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

| | |
|---|---|
| FIG 1 | eine Steuereinrichtung und einen Antrieb, |
| FIG 2 | einen von der Steuereinrichtung implementierten Regler, |
| FIG 3 bis 5 | mögliche Ausgestaltungen von FIG 2, |
| FIG 6 | ein Ablaufdiagramm, |
| FIG 7 bis 9 | Ausgestaltungen eines Kennlinienfeldes, |
| FIG 10 | ein Ablaufdiagramm, |
| FIG 11 | eine Regelanordnung, |
| FIG 12 | einen Regelfehler als Funktion der Frequenz, |
| FIG 13 bis 15 | Ablaufdiagramme und |
| FIG 16 | Regelfehler als Funktion der Frequenz für mehrere Drehzahlen. |

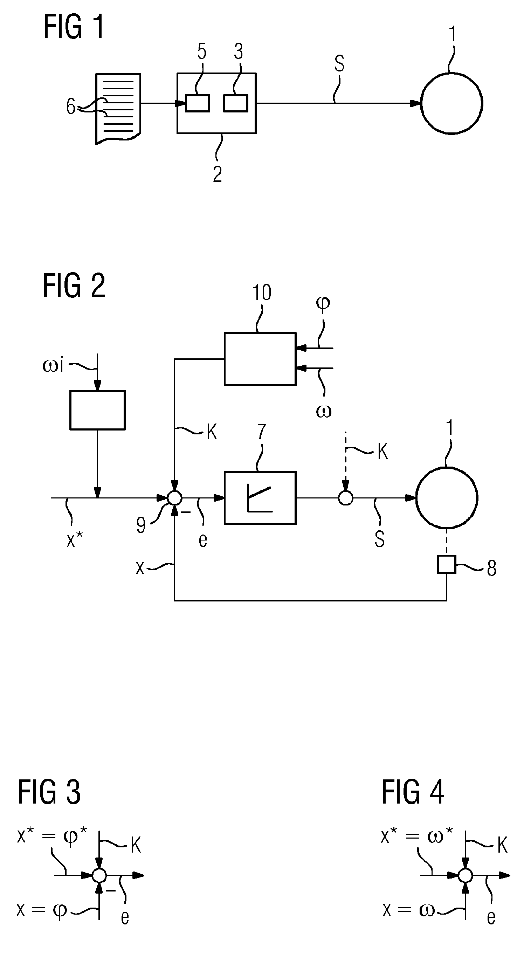

Gemäß FIG 1 wird ein Antrieb 1 von einer Steuereinrichtung 2 gesteuert. Die Steuereinrichtung 2 kann insbesondere als numerische Steuerung ausgebildet sein. Die Steuereinrichtung 2 weist intern einen Mikroprozessor 3 auf. Der Mikroprozessor 3 führt ein Steuerprogramm 4 aus, mit dem die Steuereinrichtung 2 programmiert ist und das in einem Speicher 5 der Steuereinrichtung 2 hinterlegt ist. Das Steuerprogramm 4 umfasst Maschinencode 6, der von der Steuereinrichtung 2 - genauer gesagt vom Mikroprozessor 3 der Steuereinrichtung 2 - unmittelbar abarbeitbar ist. Die Abarbeitung des Maschinencodes 6 durch die Steuereinrichtung 2 bewirkt, dass die Steuereinrichtung ein Betriebsverfahren ausführt, das nachstehend in Verbindung mit den weiteren FIG näher erläutert wird.

Gemäß FIG 2 implementiert die Steuereinrichtung 2 aufgrund der Ausführung des Steuerprogramms 4 bzw. der Abarbeitung des Maschinencodes 6 unter anderem einen Regler 7. Der Regler 7 kann beispielsweise als P-Regler oder als PI-Regler ausgebildet sein. Auch andere Ausgestaltungen sind möglich. Der Regler 7 nimmt eine Sollgröße $x^*$ entgegen. Die Sollgröße $x^*$ kann alternativ von der Steuereinrichtung 2 intern generiert werden oder der Steuereinrichtung 2 von außen vorgegeben werden.

Der Regler 7 nimmt weiterhin eine korrespondierende Istgröße $x$ des Antriebs 1 entgegen. Die Istgröße $x$ wird in der Regel mittels einer Sensoreinrichtung 8 erfasst und der Steuereinrichtung 2 zugeführt. Der Regler 7 ermittelt anhand der Sollgröße $x^*$ und der Istgröße $x$ eine Stellgröße $S$ für den Antrieb 1 und beaufschlagt den Antrieb 1 mit der Stellgröße $S$. Insbesondere ermittelt der Regler 7 in einem Knotenpunkt 9 den Regelfehler $e$, d.h. die Differenz von Sollgröße $x^*$ und Istgröße $x$.

Im Idealfall ermittelt der Regler 7 die Stellgröße $S$ derart, dass der Regelfehler $e$ vollständig verschwindet, die Istgröße $x$ also gleich der Sollgröße $x^*$ ist. In der Praxis treten jedoch geringe Abweichungen der Istgröße $x$ von der Sollgröße $x^*$ auf. Manche der Abweichungen treten stochastisch auf und sind nicht vorhersagbar. Andere der Abweichungen sind deterministisch. Insbesondere treten manche Abweichungen ortsperiodisch mit der Drehstellung $\varphi$ des

Antriebs 1 auf. Das Ausmaß, zu dem die Abweichungen auftreten, kann weiterhin von der Drehzahl ω = dφ/dt des Antriebs 1 abhängen.

Der deterministische Teil der Abweichungen kann korrigiert werden. Zur Korrektur dieses Teils der Abweichungen ist dem Regler 7 ein Korrekturwertermittler 10 zugeordnet. Auch der Korrekturwertermittler 10 wird von der Steuereinrichtung 2 aufgrund der Ausführung des Steuerprogramms 4 bzw. der Abarbeitung des Maschinencodes 6 implementiert. Dem Korrekturwertermittler 10 werden die Drehstellung φ und die Drehzahl ω des Antriebs 1 zugeführt. Es kann sich bei den dem Korrekturwertermittler 10 zugeführten Größen φ, ω alternativ um Istwerte oder um Sollwerte handeln. Der Korrekturwertermittler 10 ermittelt anhand der Drehstellung φ und der Drehzahl ω einen Korrekturwert K. Der Korrekturwert K ist also sowohl von der Drehstellung φ des Antriebs 1 als auch von der Drehzahl ω des Antriebs 1 abhängig.

Der Korrekturwert K wird in die Ermittlung der Stellgröße S, mit der der Antrieb 1 beaufschlagt wird, eingebunden. Hierzu ist es möglich, dass die Sollgröße x* um den Korrekturwert K korrigiert wird. Alternativ ist es möglich, dass die Istgröße x des Antriebs 1 um den Korrekturwert K korrigiert wird. Auch ist es möglich, den Regelfehler e um den Korrekturwert K zu korrigieren. Diese Korrekturen werden vor dem Ermitteln der Stellgröße S durch den Regler 7 ausgeführt. Die in FIG 2 dargestellte Vorgehensweise, bei welcher der Korrekturwert K dem Knotenpunkt 9 zugeführt wird, kann als Implementierung einer beliebigen dieser drei Möglichkeiten angesehen werden. Alternativ ist es möglich, dass die Stellgröße S um den Korrekturwert K korrigiert wird. Diese Korrektur wird nach dem Ermitteln der Stellgröße S durch den Regler 7, aber vor dem Beaufschlagen des Antriebs 1 mit der Stellgröße S ausgeführt. Diese Möglichkeit ist in FIG 2 als Alternative gestrichelt eingezeichnet.

Die Art der Istgröße x des Antriebs 1 kann prinzipiell beliebiger Natur sein. Es kann sich bei der Istgröße x des Antriebs 1 beispielsweise entsprechend der Darstellung in den FIG 3 bis 5 um die Drehstellung φ oder die Drehzahl ω des Antriebs 1 oder ein von dem Antrieb 1 ausgeübtes Moment M handeln. Auch hieraus abgeleitete Werte sind möglich. Entscheidend ist, dass die Istgröße x ohne die Korrektur durch den Korrekturwert K einen Regelfehler e aufweist, der sowohl von der Drehstellung φ als auch der Drehzahl ω des Antriebs 1 abhängig ist.

Die Art und Weise der Ermittlung des Korrekturwerts K wird nachstehend in Verbindung mit den FIG 1, 2 und 6 näher erläutert.

Der Korrekturwertermittler 10 umfasst ein Kennlinienfeld 11. In dem Kennlinienfeld 11 ist eine Vielzahl von Basiswerten $an(\omega i)$, $bn(\omega i)$ (mit n = 1, 2, ... N) gespeichert. Die Basiswerte $an$, $bn$ sind auf eine jeweilige Basisdrehzahl $\omega i$ (i = 1, 2, ...) bezogen. Die Basiswerte $an(\omega i)$, $bn(\omega i)$ sind also für jede Basisdrehzahl $\omega i$ eigenständig definiert. Die Basiswerte $an(\omega i)$, $bn(\omega i)$ können insbesondere Wichtungsfaktoren sein, welche festlegen, zu welchem Ausmaß und mit welcher Phasenlage ganzzahlige Vielfache der Drehstellung φ in die Ermittlung des Korrekturwerts K eingehen. Der Wert n entspricht einem Faktor, mit dem die Drehstellung φ multipliziert werden muss, um das entsprechende ganzzahlige Vielfache der Drehstellung φ zu ermitteln.

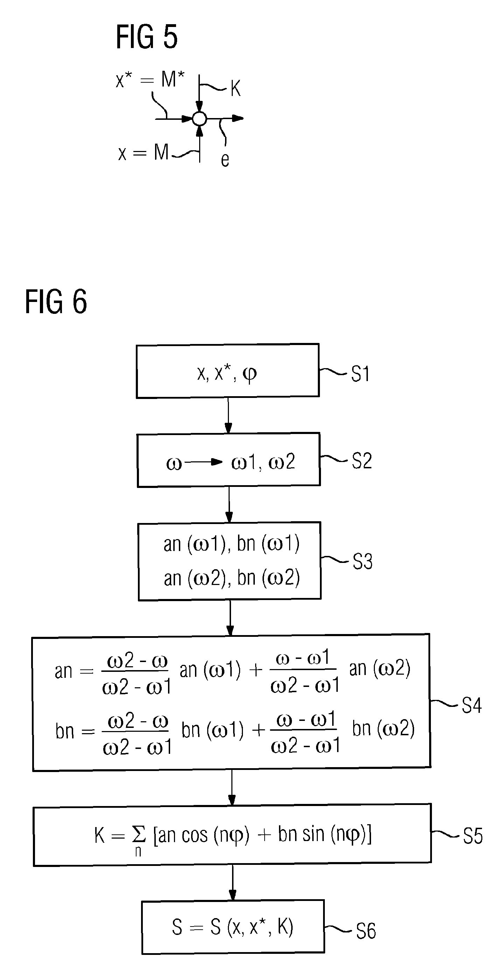

Gemäß FIG 6 nimmt die Steuereinrichtung 2 in einem Schritt S1 die Sollgröße x*, die Istgröße x und die Drehstellung φ des Antriebs 1 entgegen. In einem Schritt S2 ermittelt die Steuereinrichtung 2 zwei Basisdrehzahlen $\omega 1$, $\omega 2$. Die Ermittlung des Schrittes S2 erfolgt anhand der Drehzahl ω des Antriebs 1. Die Drehzahl ω des Antriebs 1 kann der Steuereinrichtung 2 alternativ im Schritt S1 vorgegeben werden oder von der Steuereinrichtung 2 aus der zeitlichen Abfolge der Drehstellungen φ des Antriebs 1 abgeleitet werden.

In einem Schritt S3 liest die Steuereinrichtung 2 aus dem Kennlinienfeld 11 die Basiswerte $an(\omega 1)$, $bn(\omega 1)$ an $(\omega 2)$, $bn(\omega 2)$ für die ermittelten Basisdrehzahlen $\omega 1$, $\omega 2$ aus. In einem Schritt S4 ermittelt die Steuereinrichtung 2 anhand der aus dem Kennlinienfeld 11 ausgelesenen Basiswerte $an(\omega 1)$, $bn(\omega 1)$ $an(\omega 2)$, $bn(\omega 2)$ konkrete Parameter $an$, $bn$ für die momentane Drehzahl ω. Im einfachsten Fall kann die Steuereinrichtung 2 schlichtweg aus dem Kennlinienfeld 11 ausgelesene Basiswerte $an(\omega 1)$, $bn(\omega 1)$ $an(\omega 2)$, $bn(\omega 2)$ 1:1 als Parameter $an$, $bn$ übernehmen. Vorzugsweise führt die Steuereinrichtung 2 im Schritt S4 jedoch eine Interpolation durch, insbesondere eine lineare Interpolation.

In einem Schritt S5 parametriert die Steuereinrichtung 2 eine von der Drehstellung φ des Antriebs 1 abhängige Funktion mit den ermittelten Parametern $an$, $bn$. Sodann ermittelt sie - ebenfalls im Schritt S5 - durch Einsetzen der Drehstellung φ des Antriebs 1 in die parametrierte Funktion den Korrekturwert K. In einem Schritt S6 ermittelt die Steuereinrichtung 2 sodann die Stellgröße S und beaufschlagt den Antrieb 1 mit der Stellgröße S. Die Steuereinrichtung 2 berücksichtigt bei der Ermittlung der Stellgröße S im Rahmen des Schrittes S6 insbesondere die Sollgröße x*, die Istgröße x und den ermittelten Korrekturwert K.

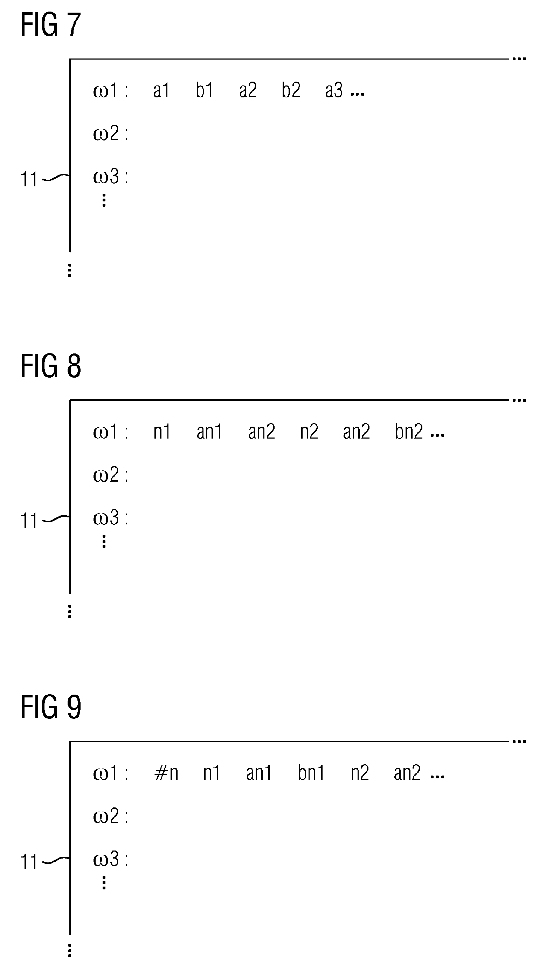

Die Art und Weise, auf welche die Basiswerte $an(\omega i)$, $bn(\omega i)$ in dem Kennlinienfeld 11 abgespeichert sind, kann nach Bedarf realisiert sein. Beispielsweise ist es entsprechend der Darstellung in FIG 7 möglich, dass das Kennlinienfeld 11 als zweidimensionales Feld aufgebaut ist, wobei in der einen Dimension die einzelnen Basisdrehzahlen $\omega i$ und in der anderen Dimension für alle Vielfache n der Drehstellung φ die jeweiligen Basiswerte $an(\omega i)$, $bn(\omega i)$ abgespeichert sind. In diesem Fall ist das ganzzahligen Vielfache, auf das der jeweilige Basiswert $an(\omega i)$, $bn(\omega i)$ sich bezieht, direkt durch den Ort im Kennlinienfeld 11 bestimmt, in dem der jeweilige Basiswert $an(\omega i)$, $bn(\omega i)$ abgespeichert ist.

Alternativ ist es möglich, dass in dem Kennlinienfeld 11 selektiv nur die Basiswerte $an(\omega i)$, $bn(\omega i)$ für bestimmte Vielfache n gespeichert werden. Beispielsweise können entsprechend der Darstellung in FIG 8 für jede Basisdrehzahl ωi mehrere Gruppen von Werten abgespeichert sein, wobei einer der Werte angibt, um welches Vielfache n der Drehstellung φ es sich handelt, und die anderen Werte die jeweils zugehörigen Basiswerte an(ωi), bn(ωi) sind. Diese Ausgestaltung führt zu einer besseren Ausnutzung des Kennlinienfeldes 11. Insbesondere sind in vielen Fällen nur einige wenige Vielfache n der Drehstellung φ relevant, beispielsweise das 24-, 36-, 48- und 72-fache sowie einige wenige weitere Vielfache n wie beispielsweise das 45-fache und das 90-fache. In derartigen Fällen kann das Kennlinienfeld 11 pro Basisdrehzahl ωi von 180 Einträgen (2 Einträgen pro Vielfaches n x 90 Vielfache n) auf 18 Einträge (3 Einträge pro Vielfaches n x 6 Vielfache n) reduziert werden.

Die Ausgestaltung von FIG 8 kann unter Umständen noch weiter optimiert werden. Insbesondere ist es entsprechend der Darstellung von FIG 9 möglich, im Kennlinienfeld 11 pro Basisdrehzahl ωi zusätzlich einen weiteren Wert zu hinterlegen, wobei dieser weitere Wert angibt, für welche Anzahl von Vielfachen n der Drehstellung φ die zugehörigen Basiswerte an(ωi), bn(ωi) im Kennlinienfeld 11 hinterlegt sind.

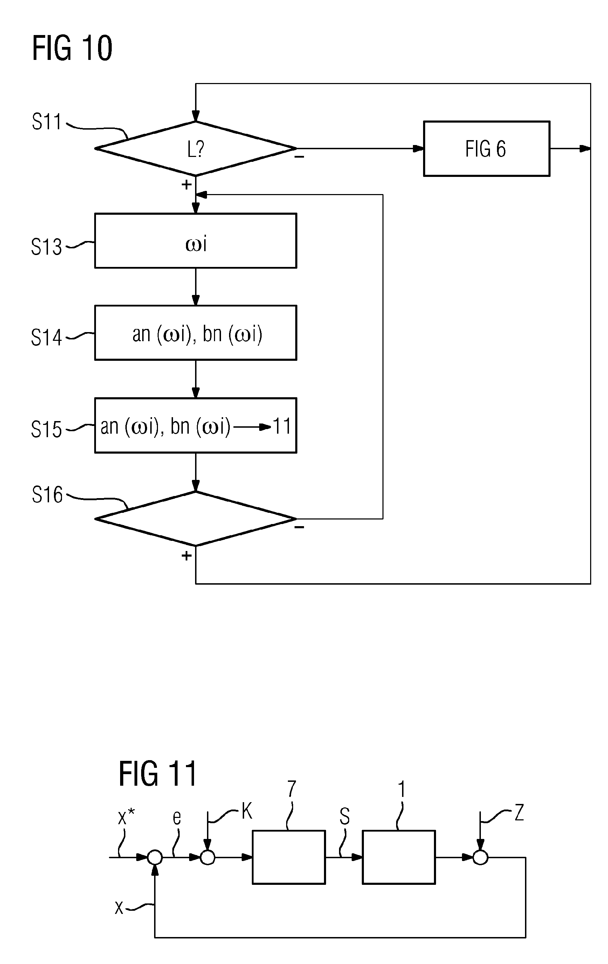

Der bisher erläuterte Betrieb der Steuereinrichtung 2 ist ein Normalbetrieb der Steuereinrichtung 2. Im Normalbetrieb verwendet die Steuereinrichtung 2 die in dem Kennlinienfeld 11 für die Basisdrehzahlen ωi abgespeicherten Basiswerte an(ωi), bn(ωi). In einer bevorzugten Ausgestaltung der vorliegenden Erfindung ist die Steuereinrichtung 2 zusätzlich in der Lage, die Basiswerte an(ωi), bn(ωi) selbst zu ermitteln. In diesem Fall prüft die Steuereinrichtung 2 gemäß FIG 10 in einem Schritt S11, ob sie sich - beispielsweise aufgrund einer Vorgabe eines entsprechenden Befehls durch einen Bediener der Steuereinrichtung 2 - in einem Lernbetrieb L befindet. Wenn dies nicht der Fall ist, geht die Steuereinrichtung 2 zu einem Schritt S12 über, in dem sie den Normalbetrieb ausführt.

Im Lernbetrieb L selektiert die Steuereinrichtung 2 zunächst in einem Schritt S13 eine Basisdrehzahl ωi. Sodann ermittelt die Steuereinrichtung 2 in einem Schritt S14 für diese Basisdrehzahl ωi die zugehörigen Basiswerte an(ωi), bn(ωi). In einem Schritt S15 speichert die Steuereinrichtung 2 die ermittelten Basiswerte an(ωi), bn(ωi) für diese Basisdrehzahl ωi im Kennlinienfeld 11 ab. Im Schritt S16 prüft die Steuereinrichtung 2, ob sie die Schritte S14 und S15 bereits für alle Basisdrehzahlen ωi ausgeführt hat. Wenn dies nicht der Fall ist, geht die Steuereinrichtung 2 zum Schritt S13 zurück, in dem sie eine andere Basisdrehzahl ωi selektiert, für welche sie die Schritte S14 und S15 noch nicht ausgeführt hat. Anderenfalls ist die Vorgehensweise von FIG 10 beendet.

Zur Vorgehensweise bei der Ermittlung der Basiswerte an(ωi), bn(ωi) ist es sinnvoll, zunächst näher auf den Hintergrund der vorliegenden Erfindung und auf prinzipiell bekannte regeltechnische Vorgehensweisen einzugehen.

Die vorliegende Erfindung beruht auf dem Ansatz, dass die Störung, die zum Regelfehler e führt, periodisch mit der Drehstellung φ ist. Es gilt also der Ansatz

$$e(\varphi, \omega) = \sum_n \left[ cn(\omega) \cdot \cos(n\varphi) + dn(\omega) \cdot \sin(n\varphi) \right] \qquad (1)$$

cn(ω) und dn(ω) sind die Koeffizienten der Fourier-Reihenentwicklung des Regelfehlers e. Die jeweiligen Koeffizienten cn(ω) und dn(ω) bestimmen durch die Beziehung

$$r = \sqrt{cn(\omega)^2 + dn(\omega)^2} \qquad (2)$$

die Amplitude bzw. das Ausmaß r des jeweiligen Störungsanteils und - unter Berücksichtigung der singulären Fälle und der Vorzeichen von cn(ω) und dn(ω) - durch die Beziehung

$$\delta = \arctan \frac{dn(\omega)}{cn(\omega)} \qquad (3)$$

die Phasenlage δ des jeweiligen Störungsanteils.

Wenn die Koeffizienten cn(ω), dn(ω) bekannt sind, kann auch die Kompensation durch den Korrekturwert K erfolgen. Zur Kompensation ist ein phasenrichtiges Aufschalten eines Korrekturwerts K erforderlich, dessen Wert sich aus einer Anzahl von Sinus- und Cosinusfunktionen der Drehstellung φ ermittelt:

$$K(\varphi, \omega) = \sum_n \left[ an(\omega) \cdot \cos(n\varphi) + bn(\omega) \cdot \sin(n\varphi) \right] \qquad (4)$$

Die Parameter an(ω) und bn(ω) bestimmen - analog zu den Koeffizienten cn(ω) und dn(ω) - die Amplitude bzw. das Ausmaß und die Phasenlage des jeweiligen Kompensationsanteils.

Der Aufschaltpunkt des Korrekturwerts K und der Messpunkt, an dem die Sensoreinrichtung 8 die Istgröße x erfasst, sind im allgemeinen nicht miteinander identisch. Zwischen den beiden Signalen K und x existiert daher ein dynamisches, frequenzabhängiges Übertragungsverhalten. Das Übertragungsverhalten als solches ist zeitinvariant. Es ist jedoch in vielen Fällen nicht bekannt. Darüber hinaus bräuchte man weiterhin auch ein Modell der Störeffekte, um deren Auswirkung auf den erfassten Regelfehler e vorhersagen zu können.

Diese Schwierigkeiten können dadurch umgangen werden, dass lernfähige Verfahren eingesetzt werden. Insbesondere kann die sogenannte ILC = iterativ lernende Regelung = iterative learning control verwendet werden. Nachfolgend wird daher zunächst, soweit für die vorliegende Erfindung erforderlich, die ILC näher erläutert. Hierbei wird die ILC direkt auf die im Rahmen der vorliegenden Erfindung gegebene Konstellation, also den Regler 7 und den Antrieb 1, angewendet.

Im Rahmen der ILC wirkt gemäß FIG 11 der Regler 7 auf den Antrieb 1. Auf den Antrieb 1 wirkt eine Störung Z. Die Störung Z bewirkt eine Abweichung der Istgröße x von der Sollgröße x*, also den Regelfehler e. Zur Kompensation des Regelfehlers e wird der Korrekturwert K aufgeschaltet, gemäß FIG 11 auf den Regelfehler e. Allgemein gilt damit die Beziehung

$$e(s) = x*(s) - x(s) = \frac{x*(s) - Z(s) - K(s) \cdot F(s)}{1 + F(s)} \qquad (5)$$

s bezeichnet hierbei den Laplace-Operator, F die Übertragungsfunktion des Regelkreises, also von Regler 7 und geregelter Strecke = Antrieb 1.

Wenn die Störung Z(s) bekannt wäre und weiterhin auch der zeitliche Verlauf der Sollgröße x* bekannt wäre, könnte durch die Kompensation

$$K(s) = \frac{x*(s) - Z(s)}{F(s)} \qquad (6)$$

der Regelfehler e(s) vollständig kompensiert werden.

Die Störung Z(s) ist zwar in der Regel nicht bekannt. Wird jedoch immer wieder die gleiche Sollgröße x*(s) aufgeschaltet und tritt immer wieder die gleiche Störung Z(s) auf, so kann die Kompensation dennoch erreicht werden. Das prinzipielle Vorgehen ist wie folgt:

Zunächst wird die Kompensation (bzw. der Korrekturwert K) auf den Wert 0 gesetzt. Der Regelfehler e wird aufgezeichnet. Der Regelfehler e (oder ein Bruchteil davon) wird in der nächsten Iteration als Korrekturwert K verwendet. Aufgrund der nunmehr erfolgenden Kompensation durch den Korrekturwert K tritt beim nächsten Durchlauf ein anderer Regelfehler e auf. In der Regel ist der nunmehr auftretende Regelfehler e kleiner als der ursprüngliche Regelfehler e. Der neue Regelfehler (oder ein Bruchteil davon) wird zum bisherigen Korrekturwert K hinzu addiert:

$$K_k(s) = K_{k-1}(s) + e_{k-1}(s) \qquad (7)$$

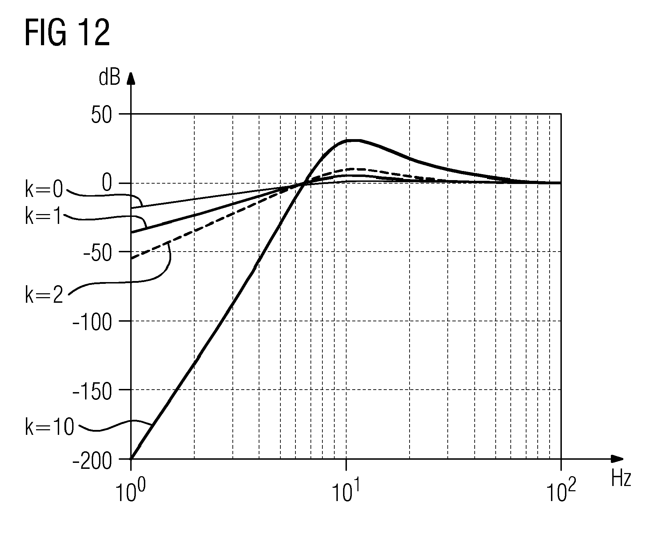

Dieses Verfahren wird wiederholt, bis der Regelfehler e klein genug geworden ist. FIG 12 zeigt beispielhaft einen Regelfehler e als Funktion der Frequenz vor der ersten Iteration (k=0) sowie nach der ersten Iteration (k=1), der zweiten Iteration (k=2) und der zehnten Iteration (k=10). Ersichtlich wird für Frequenzen unterhalb einer Grenzfrequenz - in dem Beispiel von FIG 12 ca. 55 Hz - der Einfluss der Störgröße Z(s) immer geringer. Für Frequenzen oberhalb der Grenzfrequenz nimmt der Regelfehler e hingegen zu. Hier ist die Kompensation des Regelfehlers e durch Aufschalten des Korrekturwerts K nicht möglich.

Das allgemeine Beispiel der FIG 12 zeigt, dass eine ILC nicht stets zu einem besseren Ergebnis führt. Für Frequenzen unterhalb der Grenzfrequenz verringert sie den Regelfehler e jedoch deutlich.

Eine weitere Verbesserung schafft eine Erweiterung der Regel, anhand derer der Korrekturwert K im Rahmen der Iterationen nach und nach ermittelt wird. Insbesondere wird der Regelfehler e der jeweiligen Iteration mit einer Lernrate W gewichtet:

$$K_k(s) = K_{k-1}(s) + W(s) \cdot e_{k-1}(s) \qquad (8)$$

Die Lernrate W ist im allgemeinen frequenzabhängig, um ein Divergieren für hohe Frequenzen zu verhindern. Im Idealfall gilt für die Lernrate W die Beziehung

$$W(s) = \frac{1 + F(s)}{F(s)} \qquad (9)$$

Denn dann würde der Regelfehler e bereits in der ersten Iteration vollständig kompensiert.

Die ideale Lernrate kann nur dann ermittelt werden, wenn sowohl die geregelte Strecke 1 als auch der Regler 7 bekannt sind. Sind diese nicht oder nicht hinreichend bekannt, kann die Lernrate W durch die Beziehung

$$W(s) = -\frac{K_{k1}(s) - K_{k2}(s)}{e_{k1}(s) - e_{k2}(s)} \qquad (10)$$

approximiert werden. k1 und k2 sind voneinander verschiedene Indizes, stehen also für verschiedene Iterationen, im einfachsten Fall zwei unmittelbar aufeinanderfolgende Iterationen.

Weiterhin muss die Lernrate noch nach oben begrenzt werden, da anderenfalls bei hohen Frequenzen insbesondere Messfehler extrem verstärkt würden. Hierfür kann ein klassisches Tiefpassfilter verwendet werden, beispielsweise ein Butterworth-Entwurf. Es ergibt sich somit als resultierende Lernrate

$$W(s) = -\frac{K_{k1}(s) - K_{k2}(s)}{e_{k1}(s) - e_{k2}(s)} \cdot H(s) \qquad (11)$$

wobei H die Übertragungsfunktion des Tiefpassfilters ist.

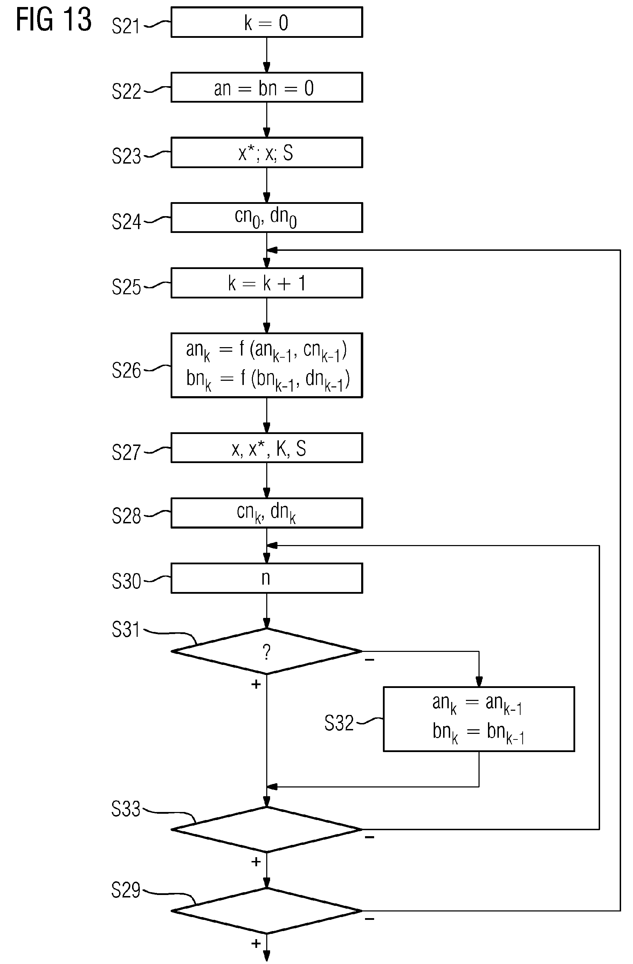

Zur Implementierung des Schrittes S14 von FIG 10 wird daher in der Praxis entsprechend FIG 13 vorgegangen. Es sei in diesem Zusammenhang daran erinnert, dass der Schritt S14 von FIG 10 für eine bestimmte, im Schritt S13 von FIG 10 bereits festgelegte Basisdrehzahl ωi ausgeführt wird. Alle Ausführungen zu den FIG 13 beziehen sich daher auf diese, im Schritt S13 von FIG 10 festgelegte Basisdrehzahl ωi.

Gemäß FIG 13 setzt die Steuereinrichtung 2 in einem Schritt S21 den Index k auf den Wert 0. Der Index k gibt an, wie viele Iterationen bzw. Lernzyklen bereits durchgeführt wurden. Die Begriffe "Iteration" und "Lernzyklus" sind im Sinne der vorliegenden Erfindung also gleichbedeutend. Im Schritt S22 setzt die Steuereinrichtung 2 die Parameter an, bn (für alle relevanten Werte von n) auf den Wert 0. In einem Schritt S23 führt die Steuereinrichtung 2 dem Regler 7 einen vorbestimmten Verlauf der Sollgröße x* zu - nachstehend als Lern-Sollgröße x* bezeichnet. Weiterhin erfasst die Steuereinrichtung 2 die Istgröße x und ermittelt die Stellgröße S. Im Schritt S23 erfolgt auch das Beaufschlagen des Antriebs 1 mit der Stellgröße S.

Die Lern-Sollgröße x* wird von der Steuereinrichtung 2 selbst generiert, beispielsweise - siehe FIG 2 - mittels eines entsprechenden Signalgebers 12. Auch der Signalgeber 12 wird von der Steuereinrichtung 2 aufgrund der Abarbeitung des Maschinencodes 6 implementiert.

Die Lern-Sollgröße x* variiert mit der festgelegten Basisdrehzahl ωi. In der Regel erfolgt eine rein sinusförmige Variation. Im Rahmen des Schrittes S23 wird der Korrekturwert K nicht aufgeschaltet. Das Beaufschlagen des Antriebs 1 mit der Stellgröße S erfolgt für eine gewisse Zeit. Die Zeit korrespondiert in der Regel mit mehreren vollen Perioden der Lern-Sollgröße x* . Während dieser Zeit ermittelt die Steuereinrichtung 2 zeitsynchron mit dem Beaufschlagen des Antriebs 1 mit der Stellgröße S den Regelfehler e - also die Differenz von Lern-Sollgröße x* und Istgröße x - und zeichnet ihn auf.

In einem Schritt S24 wertet die Steuereinrichtung 2 den zeitlichen Verlauf des Regelfehlers e aus und ermittelt daraus - beispielsweise durch Fourieranalyse - die Koeffizienten cn, dn für die entsprechenden Anteile des Regelfehlers e. Zur Implementierung des Schrittes S24 sind verschiedene Vorgehensweisen möglich, die dem Fachmann als solche bekannt und geläufig sind. Beispielsweise kann eine RLS-Schätzung (RLS = recursive least square) durchgeführt werden. Eine derartige Implementierung führt zu einem enormen Rechenaufwand. Numerisch einfacher und im Rahmen der vorliegenden Erfindung erheblich geeigneter ist die LMS-Methode (LMS = least mean square).

Die Koeffizienten cn, dn sind hier und werden auch nachstehend ohne die Angabe der Basisdrehzahl $\omega i$ verwendet, da im Rahmen von FIG 13 die Basisdrehzahl $\omega i$ fest vorgegeben ist. Es ist jedoch der Index 0 hinzugefügt, da die S21 bis S24 eine 0. Iteration darstellen. Sie sind erforderlich, um eine Basis für die nachfolgende Ausführung des ersten "echten" Lernzyklus zu schaffen, der mit einem Schritt S25 beginnt und nachfolgend erläutert wird.

Im Schritt S25 inkrementiert die Steuereinrichtung 2 den Index k. In einem Schritt S26 ermittelt die Steuereinrichtung 2 für den jeweiligen Lernzyklus, also den k-ten Lernzyklus, gültige Basiswerte $an_k$, $bn_k$. Die Ermittlung erfolgt anhand der im vorherigen - gegebenenfalls 0. - Lernzyklus gültigen Basiswerte $an_{k-1}$, $bn_{k-1}$ in Verbindung mit dem Regelfehler e des vorherigen Lernzyklus, insbesondere den für das jeweilige Vielfache der Drehstellung $\varphi$ ermittelten Koeffizienten $cn_{k-1}$, $dn_{k-1}$. In einem Schritt S27 führt die Steuereinrichtung 2 dem Regler 7 den vorbestimmten Verlauf der Lern-Sollgröße x* zu.

Weiterhin erfasst die Steuereinrichtung 2 die Istgröße x und ermittelt die Stellgröße S. Im Schritt S27 erfolgt auch das Beaufschlagen des Antriebs 1 mit der Stellgröße S.

Der Schritt S27 korrespondiert vom Ansatz her mit dem Schritt S23. Die Ausführungen zum Schritt S23 sind also anwendbar. Im Unterschied zum Schritt S23 wird im Rahmen des Schrittes S27 jedoch zusätzlich der Korrekturwert K aufgeschaltet. Der Korrekturwert K wird von der Steuereinrichtung 2 auf die gleiche Art und Weise wie im Schritt S5 von FIG 6 ermittelt. Insbesondere verwendet die Steuereinrichtung 2 zur Ermittlung des Korrekturwerts K die Parameter $an_k$, $bn_k$, die sie im Schritt S26 ermittelt hat. In einem Schritt S28 wertet die Steuereinrichtung 2 den zeitlichen Verlauf des Regelfehlers e aus und ermittelt daraus die Koeffizienten $cn_k$, $dn_k$ für die entsprechenden Anteile des Regelfehlers e. Der Schritt S28 korrespondiert inhaltlich mit dem Schritt S24.

Vom Ansatz her ist der k-te Lernzyklus damit abgeschlossen. Vom Ansatz her muss daher lediglich noch in einem Schritt S29 geprüft werden, ob ein Abbruchkriterium erfüllt ist. Das Abbruchkriterium kann beispielsweise darin bestehen, dass eine vorbestimmte Anzahl von Iterationen ausgeführt wurde, der Regelfehler e klein genug ist oder sich gegenüber der vorherigen Iteration keine oder nur noch eine geringfügige Verbesserung ergeben hat. Wenn das Abbruchkriterium erfüllt ist, ist die Vorgehensweise von FIG 13 beendet. In diesem Fall sind die zuletzt ermittelten Parameter $an_k$, $bn_k$ die Basiswerte $an(\omega i)$, $bn(\omega i)$ für die jeweilige Basisdrehzahl $\omega i$. Anderenfalls geht die Steuereinrichtung 2 zum Schritt S25 zurück, führt also eine weitere Iteration aus.

Vorzugsweise sind zusätzlich Schritte S30 bis S33 vorhanden. Im Schritt S30 selektiert die Steuereinrichtung 2 einen Wert n für das jeweils auszuwertende ganzzahlige Vielfache. Im Schritt S31 prüft die Steuereinrichtung 2, ob sich durch die Koeffizienten $an_k$, $bn_k$ der momentan ausgeführten Iteration k eine Verbesserung gegenüber der zuvor ausgeführten Iteration k-1 ergibt, sich also der Regelfehler e gegenüber dem vorherigen Lernzyklus k-1 verringert hat. Zur Überprüfung, ob sich eine Verbesserung gegenüber der vorherigen Iteration k-1 ergeben hat, kann beispielsweise die Summe der Quadrate der Koeffizienten $cn_k$, $dn_k$ der momentanen Iteration k mit der Summe der Quadrate der Koeffizienten $cn_{k-1}$, $dn_{k-1}$ der vorherigen Iteration k-1 verglichen werden. Wenn sich keine Verbesserung ergeben hat, geht die Steuereinrichtung 2 zum Schritt S32 über. Im Schritt S32 bestimmt die Steuereinrichtung 2 die im vorherigen Lernzyklus k-1 gültigen Basiswerte $an_{k-1}$, $bn_{k-1}$ als Basiswerte $an_k$, $bn_k$ für den jeweiligen Lernzyklus k. Im Ergebnis wird also der Schritt S26 wieder rückgängig gemacht. Im Falle einer Verringerung des Regelfehlers e hingegen behält die Steuereinrichtung 2 die im Schritt S26 ermittelten Basiswerte $an_k$, $bn_k$ bei. Im Schritt S33 prüft die Steuereinrichtung 2, ob sie die Schritte S30 bis S32 bereits für alle Werte n ausgeführt hat. Wenn dies nicht der Fall ist, geht die Steuereinrichtung 2 zum Schritt S30 zurück. Anderenfalls geht die Steuereinrichtung 2 zum Schritt S29 über.

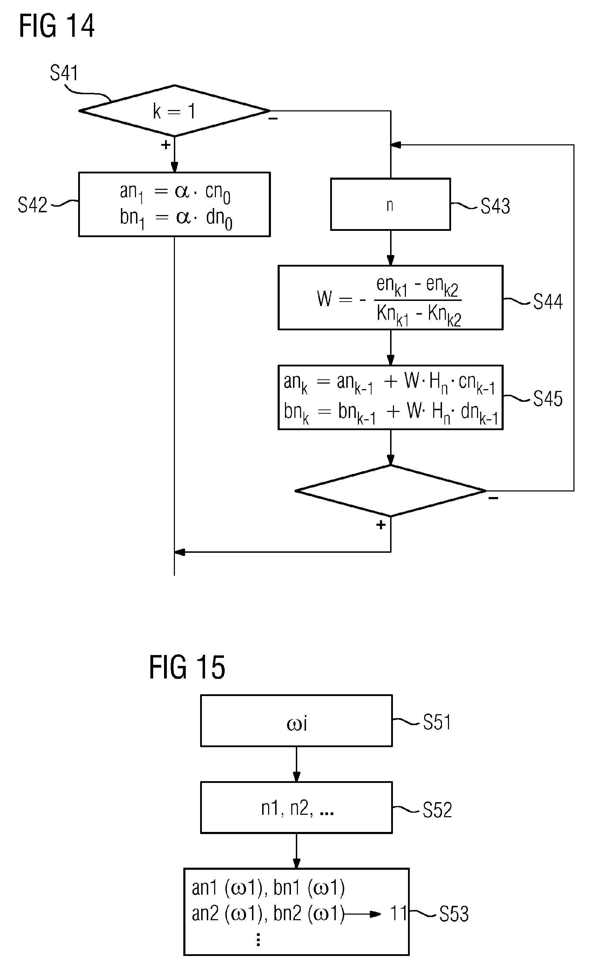

Nachfolgend wird in Verbindung mit FIG 14 eine mögliche Ausgestaltung des Schrittes S26 von FIG 13 erläutert.

Gemäß FIG 14 führt die Steuereinrichtung 2 zur Implementierung des Schrittes S26 von FIG 13 vorzugsweise Schritte S41 bis S46 aus.

Im Schritt S41 prüft die Steuereinrichtung 2, ob der Index k den Wert 1 aufweist. Wenn dies der Fall ist, geht die Steuereinrichtung 2 zum Schritt S42 über. Im Schritt S42 ermittelt die Steuereinrichtung 2 - einheitlich für alle Werte n - die Parameter $an_1$, $bn_1$ als Bruchteil $\alpha$ der Koeffizienten $cn_0$, $dn_0$. Anderenfalls, wenn also der Index k einen Wert größer als 1 aufweist, führt die Steuereinrichtung 2 die Schritte S43 bis S46 aus.

Im Schritt S43 selektiert die Steuereinrichtung 2 einen Wert n für das jeweils auszuwertende ganzzahlige Vielfache n. Im Schritt S44 ermittelt die Steuereinrichtung 2 die Lernrate W gemäß der Beziehung von Gleichung 10 - ausgewertet für den Wert n - die Lernrate W. Im Schritt S45 ermittelt die Steuereinrichtung 2 unter Verwendung der im Schritt S44 ermittelten Lernrate W die Basiswerte $an_k$, $bn_k$ für den jeweiligen Lernzyklus. Insbesondere wichtet die Steuereinrichtung 2 den Regelfehler e des vorherigen Lernzyklus mit der Lernrate W. Im Schritt S46 prüft die Steuereinrichtung 2, ob sie die Schritte S43 bis S45 bereits für alle Werte n ausgeführt hat. Wenn dies nicht der Fall ist, geht die Steuereinrichtung 2 zum Schritt S43 zurück. Anderenfalls ist die von den Schritten S43 bis S46 gebildete Schleife fertig abgearbeitet.

Im Rahmen der Speicherung der ermittelten Basiswerte $an(\omega i)$, $bn(\omega i)$ ist es möglich, dass alle für die jeweilige Basisdrehzahl $\omega i$ ermittelten Basiswerte $an(\omega i)$, $bn(\omega i)$ im Kennlinienfeld 11 abgespeichert werden. Alternativ ist es möglich, dass die Steuereinrichtung 2 im Lernbetrieb für die jeweilige Basisdrehzahl $\omega i$ eine Vielzahl von Basiswerten

an($\omega$i), bn($\omega$i) ermittelt und eigenständig entscheidet, welche der im Lernbetrieb für die jeweilige Basisdrehzahl $\omega$i ermittelten Basiswerte an($\omega$i), bn($\omega$i) sie in dem Kennlinienfeld 11 speichert. Dies wird nachstehend in Verbindung mit FIG 15 näher erläutert.

Gemäß FIG 15 selektiert die Steuereinrichtung 2 in einem Schritt S51 eine Basisdrehzahl $\omega$i. In einem Schritt S52 selektiert die Steuereinrichtung 2 für die im Schritt S51 selektierte Basisdrehzahl $\omega$i einige Werte n1, n2, usw. Die im Schritt S52 selektierten Werte n1, n2 usw. können beispielsweise diejenigen Werte n1, n2 usw. sein, deren Basiswerte an($\omega$i), bn($\omega$i) (bzw. die Summe von deren Quadraten) oberhalb eines vorbestimmten Grenzwerts liegen. Alternativ kann die Anzahl an Werten n1, n2 usw., die die Steuereinrichtung 2 im Schritt S52 selektiert, vorbestimmt sein. In diesem Fall selektiert die Steuereinrichtung 2 diejenigen Werte n1, n2 usw., deren Basiswerte an($\omega$i), bn($\omega$i) am stärksten zum Regelfehler e beitragen. In einem Schritt S53 speichert die Steuereinrichtung 2 für die selektierten Werte n1, n2 usw. - und nur für diese Werte - die zugehörigen Basiswerte an($\omega$i), bn($\omega$i) im Kennlinienfeld 11 ab.

Zusammengefasst betrifft die vorliegende Erfindung somit folgenden Sachverhalt:

Eine Steuereinrichtung 2 ermittelt in einem Normalbetrieb anhand einer Sollgröße x* und einer Istgröße x eines Antriebs 1 eine Stellgröße S für den Antrieb 1 und beaufschlagt den Antrieb 1 mit der Stellgröße S. Die Steuereinrichtung 2 korrigiert vor dem Ermitteln der Stellgröße S die Sollgröße x*, die Istgröße x oder die Differenz von Sollgröße x* und Istgröße x um einen Korrekturwert K oder vor dem Beaufschlagen des Antriebs 1 mit der Stellgröße S die Stellgröße S um den Korrekturwert K. Der Korrekturwert K ist sowohl von der Drehstellung $\varphi$ des Antriebs 1 als auch von der Drehzahl $\omega$ des Antriebs 1 abhängig.

Die vorliegende Erfindung weist viele Vorteile auf. Insbesondere können auch Abhängigkeiten von der Drehzahl $\omega$ im Kennlinienfeld 11 berücksichtigt werden. Die erfindungsgemäße Vorgehensweise ist daher leistungsfähiger als die Vorgehensweise des Standes der Technik. Weiterhin lassen sich nicht nur Nutrastmomente, sondern auch beliebige andere Störungen Z, die zu einem Regelfehler e führen, hochgenau kompensieren. Darüber hinaus muss der Ort, an dem die Störung Z zum Regelfehler e führt, nicht bekannt sein. Es ist lediglich erforderlich, dass die Störung Z sich in der Istgröße x widerspiegelt. Das Betriebsverfahren kann weiterhin direkt vor Ort von der Steuereinrichtung 2 selbst durchgeführt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Betriebsverfahren für eine Steuereinrichtung (2),

   - wobei die Steuereinrichtung (2) in einem Normalbetrieb der Steuereinrichtung (2) anhand einer Sollgröße (x*) und einer Istgröße (x) eines Antriebs (1) eine Stellgröße (S) für den Antrieb (1) ermittelt und den Antrieb (1) mit der Stellgröße (S) beaufschlagt,
   - wobei die Steuereinrichtung (2) im Normalbetrieb vor dem Ermitteln der Stellgröße (S) die Sollgröße (x*), die Istgröße (x) oder die Differenz von Sollgröße (x*) und Istgröße (x) um einen Korrekturwert (K) korrigiert oder vor dem Beaufschlagen des Antriebs (1) mit der Stellgröße (S) die Stellgröße (S) um den Korrekturwert (K) korrigiert,
   - wobei der Korrekturwert (K) sowohl von der Drehstellung ($\varphi$) des Antriebs (1) als auch von der Drehzahl ($\omega$) des Antriebs (1) abhängig ist.

2. Betriebsverfahren nach Anspruch 1,
   **dadurch gekennzeichnet, dass** die Istgröße (x) die Drehstellung ($\varphi$) oder die Drehzahl ($\omega$) des Antriebs (1) oder ein von dem Antrieb (1) ausgeübtes Moment (M) oder ein hieraus abgeleiteter Wert ist.

3. Betriebsverfahren nach Anspruch 1 oder 2,
   **dadurch gekennzeichnet, dass** die Steuereinrichtung (2) im Normalbetrieb

   - anhand der Drehzahl ($\omega$) des Antriebs (1) ermittelt, welche von in einem Kennlinienfeld (11) gespeicherten Basiswerten (an($\omega$i), bn($\omega$i)) sie aus dem Kennlinienfeld (11) ausliest,
   - anhand der aus dem Kennlinienfeld (11) ausgelesenen Basiswerte (an($\omega$i), bn($\omega$i)) Parameter (an, bn) ermittelt,
   - eine von der Drehstellung ($\varphi$) des Antriebs (1) abhängige Funktion mit den ermittelten Parametern (an, bn) parametriert und
   - den Korrekturwert (K) durch Einsetzen der Drehstellung ($\varphi$) des Antriebs (1) in die parametrierte Funktion ermittelt.

4. Betriebsverfahren nach Anspruch 3,
**dadurch gekennzeichnet, dass** die im Kennlinienfeld (11) gespeicherten Basiswerte (an($\omega$i), bn($\omega$i)) Wichtungsfaktoren sind, welche festlegen, zu welchem Ausmaß (r) und mit welcher Phasenlage ($\delta$) ganzzahlige Vielfache (n) der Drehstellung ($\varphi$) in die Ermittlung des Korrekturwerts (K) eingehen.

5. Betriebsverfahren nach Anspruch 3 oder 4,
**dadurch gekennzeichnet, dass** die Steuereinrichtung (2) in einem Lernbetrieb (L) für eine Mehrzahl von Basisdrehzahlen ($\omega$i) des Antriebs (1) jeweils die Basiswerte (an($\omega$i), bn($\omega$i)) ermittelt und in dem Kennlinienfeld (11) abspeichert.

6. Betriebsverfahren nach Anspruch 5,
**dadurch gekennzeichnet, dass** die Steuereinrichtung (2) im Lernbetrieb (L) die Basiswerte (an($\omega$i), bn($\omega$i)) durch eine wiederholte Ausführung eines Lernzyklus ermittelt und dass die Steuereinrichtung (2) in den Lernzyklen

   - anhand der im vorherigen Lernzyklus gültigen Basiswerte (an$_{k-1}$, bn$_{k-1}$) in Verbindung mit einem Regelfehler (e) des vorherigen Lernzyklus die für den jeweiligen Lernzyklus gültigen Basiswerte (an$_k$, bn$_k$) ermittelt,
   - eine mit der jeweiligen Basisdrehzahl ($\omega$i) variierende Lern-Sollgröße (x*) ermittelt,
   - anhand der Lern-Sollgröße (x*) und der Istgröße (x) eine Lern-Stellgröße (S) für den Antrieb (1) ermittelt und den Antrieb (1) mit der Lern-Stellgröße (S) beaufschlagt,
   - die von der Drehstellung ($\varphi$) des Antriebs (1) abhängige Funktion mit für die jeweilige Basisdrehzahl ($\omega$i) im jeweiligen Lernzyklus gültigen Basiswerten (an$_k$, bn$_k$) parametriert und durch Einsetzen der Drehstellung ($\varphi$) des Antriebs (1) in die parametrierte Funktion einen jeweiligen Korrekturwert (K) ermittelt,
   - vor dem Ermitteln der Lern-Stellgröße (S) die Lern-Sollgröße (x*), die Istgröße (x) oder die Differenz von Lern-Sollgröße (x*) und Istgröße (x) um den jeweiligen Korrekturwert (K) korrigiert oder vor dem Beaufschlagen des Antriebs (1) mit der Lern-Stellgröße (S) die Lern-Stellgröße (S) um den jeweiligen Korrekturwert (K) korrigiert und
   - durch Bilden der Differenz von Lern-Sollgröße (x*) und Istgröße (x) den Regelfehler (e) für den jeweiligen Lernzyklus ermittelt.

7. Betriebsverfahren nach Anspruch 6,
**dadurch gekennzeichnet, dass** die Steuereinrichtung (2) im Rahmen der Ermittlung der für den jeweiligen Lernzyklus gültigen Basiswerte (an$_k$, bn$_k$) den Regelfehler (e) des vorherigen Lernzyklus mit einer Lernrate (W) wichtet und dass die Steuereinrichtung (2) die Lernrate (W) von Lernzyklus zu Lernzyklus jeweils neu bestimmt.

8. Betriebsverfahren nach Anspruch 6 oder 7,
**dadurch gekennzeichnet, dass** die Steuereinrichtung (2) nach dem Ermitteln des Regelfehlers (e) für den jeweiligen Lernzyklus

   - prüft, ob sich gegenüber dem vorherigen Lernzyklus eine Verringerung des Regelfehlers (e) ergibt,
   - im Falle einer Verringerung des Regelfehlers (e) die im jeweiligen Lernzyklus gültigen Basiswerte (an$_k$, bn$_k$) beibehält und
   - anderenfalls die im vorherigen Lernzyklus gültigen Basiswerte (an$_{k-1}$, bn$_{k-1}$) als Basiswerte (an$_k$, bn$_k$) für den jeweiligen Lernzyklus bestimmt.

9. Betriebsverfahren nach einem der Ansprüche 5 bis 8,
**dadurch gekennzeichnet, dass** die Steuereinrichtung (2) im Lernbetrieb (L) für die Basisdrehzahlen ($\omega$i) jeweils eine Vielzahl von Basiswerten (an($\omega$i), bn($\omega$i)) ermittelt und eigenständig entscheidet, welche der im Lernbetrieb (L) für die jeweilige Basisdrehzahl ($\omega$i) ermittelten Basiswerte (an($\omega$i), bn($\omega$i)) sie in dem Kennlinienfeld (11) speichert.

10. Steuerprogramm für eine Steuereinrichtung (2) eines Antriebs (1), wobei das Steuerprogramm Maschinencode (6) umfasst, der von der Steuereinrichtung (2) unmittelbar abarbeitbar ist, wobei die Abarbeitung des Maschinencodes (6) durch die Steuereinrichtung (2) bewirkt, dass die Steuereinrichtung (2) ein Betriebsverfahren nach einem der obigen Ansprüche ausführt.

11. Steuereinrichtung für einen Antrieb (1), wobei die Steuereinrichtung mit einem Steuerprogramm (4) nach Anspruch 10 programmiert ist.

12. Antrieb, wobei der Antrieb von einer Steuereinrichtung (2) nach Anspruch 11 gesteuert wird.

# FIG 1

# FIG 2

# FIG 3

$x^* = \varphi^*$
$x = \varphi$

# FIG 4

$x^* = \omega^*$
$x = \omega$

## FIG 5

$$x^* = M^*$$ 
$$x = M$$ 
$$K$$ 
$$e$$

## FIG 6

$$x, x^*, \varphi \qquad \text{S1}$$

$$\omega \longrightarrow \omega 1, \omega 2 \qquad \text{S2}$$

$$an(\omega 1), bn(\omega 1) \\ an(\omega 2), bn(\omega 2) \qquad \text{S3}$$

$$an = \frac{\omega 2 - \omega}{\omega 2 - \omega 1} \, an(\omega 1) + \frac{\omega - \omega 1}{\omega 2 - \omega 1} \, an(\omega 2)$$

$$bn = \frac{\omega 2 - \omega}{\omega 2 - \omega 1} \, bn(\omega 1) + \frac{\omega - \omega 1}{\omega 2 - \omega 1} \, bn(\omega 2) \qquad \text{S4}$$

$$K = \sum_n [an \cos(n\varphi) + bn \sin(n\varphi)] \qquad \text{S5}$$

$$S = S(x, x^*, K) \qquad \text{S6}$$

# FIG 7

ω1 :    a1    b1    a2    b2    a3 ...

ω2 :

11 — ω3 :
   ⋮

⋮

# FIG 8

ω1 :    n1    an1    an2    n2    an2    bn2 ...

ω2 :

11 — ω3 :
   ⋮

⋮

# FIG 9

ω1 :    #n    n1    an1    bn1    n2    an2 ...

ω2 :

11 — ω3 :
   ⋮

⋮

## FIG 10

## FIG 11

FIG 12

**FIG 13**

S21 — $k = 0$

S22 — $an = bn = 0$

S23 — $x^*; x; S$

S24 — $cn_0, dn_0$

S25 — $k = k + 1$

S26 — $an_k = f(an_{k-1}, cn_{k-1})$
$bn_k = f(bn_{k-1}, dn_{k-1})$

S27 — $x, x^*, K, S$

S28 — $cn_k, dn_k$

S30 — $n$

S31 — ?

S32 — $an_k = an_{k-1}$
$bn_k = bn_{k-1}$

S33 —

S29 —

## FIG 14

S41

$$k = 1$$

S42

$$an_1 = \alpha \cdot cn_0$$
$$bn_1 = \alpha \cdot dn_0$$

n — S43

$$W = -\frac{en_{k1} - en_{k2}}{Kn_{k1} - Kn_{k2}}$$ — S44

$$an_k = an_{k-1} + W \cdot H_n \cdot cn_{k-1}$$
$$bn_k = bn_{k-1} + W \cdot H_n \cdot dn_{k-1}$$ — S45

## FIG 15

$$\omega i$$ — S51

$$n1, n2, \ldots$$ — S52

$$an1\,(\omega 1),\ bn1\,(\omega 1)$$
$$an2\,(\omega 1),\ bn2\,(\omega 1) \longrightarrow 11$$ — S53
$$\vdots$$

FIG 16

Europäisches
Patentamt

European
Patent Office

Office européen
des brevets

**EUROPÄISCHER RECHERCHENBERICHT**

Nummer der Anmeldung

EP 16 15 6494

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/306411 A1 (TADANO YUGO [JP]) 6. Dezember 2012 (2012-12-06) | 1-7,9-12 | INV. G05B13/02 |
| Y | * Absatz [0004] - Absatz [0031]; Abbildungen 2,3 * | 8 | G05B19/19 G05B19/404 |
| | ----- | | H02P23/04 |
| X | WO 2015/092462 A1 (SKF AB [SE]; UNIV NANTES [FR]) 25. Juni 2015 (2015-06-25) * Seite 1 - Seite 5; Abbildungen 1-4 * | 1,2, 10-12 | H02P6/10 |
| | ----- | | |
| X | YUGO TADANO ET AL: "Periodic learning suppression control of torque ripple utilizing system identification for permanent magnet synchronous motors", 2010 INTERNATIONAL POWER ELECTRONICS CONFERENCE : IPEC-SAPPORO 2010 - [ECCE ASIA] ; SAPPORO, JAPAN, IEEE, PISCATAWAY, NJ, USA, 21. Juni 2010 (2010-06-21), Seiten 1363-1370, XP031729726, ISBN: 978-1-4244-5394-8 * Seite 1363 - Seite 1370 * | 1,2, 10-12 | |
| | ----- | | RECHERCHIERTE SACHGEBIETE (IPC) |
| X | US 2013/221887 A1 (AGHILI FARHAD [US]) 29. August 2013 (2013-08-29) * Absatz [0037] - Absatz [0038]; Anspruch 1; Abbildungen 1,3 * | 1,2, 10-12 | G05B H02P |
| | ----- | | |
| X | EP 0 851 571 A2 (SHARP KK [JP]) 1. Juli 1998 (1998-07-01) * Seite 12 - Seite 16; Abbildungen 7,11 * | 1,2, 10-12 | |
| | ----- | | |
| X | DE 697 00 223 T2 (SAMSUNG ELECTRONICS CO LTD [KR]) 9. Dezember 1999 (1999-12-09) * Seite 10; Abbildungen 2,3 * | 1,2, 10-12 | |
| | ----- | | |
| Y | US 2005/256605 A1 (MAEDA KAZUOMI [JP] ET AL) 17. November 2005 (2005-11-17) | 8 | |
| A | * Absatz [0010] - Absatz [0012] * * Absatz [0039] * | 1-7,9-12 | |
| | ----- | | |

Der vorliegende Recherchenbericht wurde für alle Patentansprüche erstellt

| Recherchenort | Abschlußdatum der Recherche | Prüfer |
|---|---|---|
| Den Haag | 28. Juli 2016 | Marinica, Raluca |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 15 6494

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-07-2016

| Im Recherchenbericht angeführtes Patentdokument | Datum der Veröffentlichung | Mitglied(er) der Patentfamilie | Datum der Veröffentlichung |
|---|---|---|---|
| US 2012306411 A1 | 06-12-2012 | CN 102771043 A<br>JP 5446988 B2<br>JP 2011176953 A<br>KR 20120120391 A<br>US 2012306411 A1<br>WO 2011105355 A1 | 07-11-2012<br>19-03-2014<br>08-09-2011<br>01-11-2012<br>06-12-2012<br>01-09-2011 |
| WO 2015092462 A1 | 25-06-2015 | KEINE | |
| US 2013221887 A1 | 29-08-2013 | KEINE | |
| EP 0851571 A2 | 01-07-1998 | DE 69722362 D1<br>DE 69722362 T2<br>EP 0851571 A2<br>JP 3281561 B2<br>JP H10191680 A<br>US 6049182 A | 03-07-2003<br>19-02-2004<br>01-07-1998<br>13-05-2002<br>21-07-1998<br>11-04-2000 |
| DE 69700223 T2 | 09-12-1999 | CN 1166722 A<br>DE 69700223 D1<br>DE 69700223 T2<br>EP 0805383 A1<br>JP 3254404 B2<br>JP H1056791 A | 03-12-1997<br>24-06-1999<br>09-12-1999<br>05-11-1997<br>04-02-2002<br>24-02-1998 |
| US 2005256605 A1 | 17-11-2005 | CN 1700124 A<br>EP 1600832 A1<br>JP 2005327191 A<br>US 2005256605 A1 | 23-11-2005<br>30-11-2005<br>24-11-2005<br>17-11-2005 |

EPO FORM P0461

Für nähere Einzelheiten zu diesem Anhang : siehe Amtsblatt des Europäischen Patentamts, Nr.12/82